# EUROPEAN PATENT APPLICATION

(11) **EP 4 304 254 A1**
(43) Date of publication of application: **10.01.2024**
(21) Application number: 23183524.0
(22) Date of filing: 05.07.2023
(51) Int. Cl.: H04W 56/00, H04W 72/0453, H04W 84/12

(54) **METHOD AND APPARATUS FOR MANAGING SEMI-DYNAMIC SUBBAND TRANSITION OPERATION**

(30) Priority: 07.07.2022 US 202263367823 P; 03.07.2023 US 202318217628
(71) Applicant: MediaTek Inc., Hsin-Chu 300 (TW)
(72) Inventor: HSU, Chien-Fang, 30078 Hsinchu City (TW); YEE, James Chih-Shi, San Jose, 95134 (US)
(74) Representative: Hoefer & Partner Patentanwälte mbB

(57) **Abstract**

A wireless communication device (102) includes a network interface circuit (117) and a control circuit (116). The network interface circuit (117) communicates with at least one another wireless communication device (104) that is associated with the wireless communication device (102). The control circuit (116) generates a first frame (F1), and sends the first frame (F1) to the at least one another wireless communication device (104) through the network interface circuit (117), wherein the first frame (F1) carries timing information of a subband transition between a primary band and a specific subband (INF_T1).

## Description

### Field of the Invention

The present invention relates to wireless communications, and more particularly, to a method and apparatus for managing a semi-dynamic subband transition operation.

### Background of the Invention

When an access point (AP) operating on a link with a large bandwidth, it may not utilize the whole operating bandwidth (e.g. 320 MHz) efficiently when interference from an overlapping basic service set (OBSS) occupies the primary channel or when the non-AP stations (STAs) are not capable of operating at the large bandwidth as AP, which results in wastage of bandwidth capabilities of the AP. To address this issue, one typical solution may enable the AP to use subband transition for increasing the efficiency by allowing a non-AP STA to operate on a subband (in which a secondary channel is allocated) outside a primary band (in which a primary channel is allocated). However, if the target STAs of the subchannel transmission are not well-managed, the benefits by the subchannel transmission is not fully utilized. Hence, there is a need for an innovative subband transition scheme which can effectively manage the subband transition operation.

### Summary of the Invention

This in mind, the present invention aims at providing a method and apparatus for managing a semi-dynamic subband transition operation.

This is achieved by the method and the apparatus according to independent claims. The dependent claims pertain to corresponding further developments and improvements.

As will be seen more clearly from the detailed description following below, one claimed wireless communication device includes a network interface circuit and a control circuit. The network interface circuit is arranged to communicate with at least one another wireless communication device that is associated with the wireless communication device. The control circuit is arranged to generate a first frame and send the first frame to said at least one another wireless communication device through the network interface circuit, wherein the first frame is arranged to carry timing information of a subband transition between a primary band and a specific subband.

Another claimed wireless communication device includes a network interface circuit and a control circuit. The network interface circuit is arranged to communicate with at least one another wireless communication device that is associated with the wireless communication device. The control circuit is arranged to receive a first frame from said at least one another wireless communication device through the network interface circuit, wherein the first frame is arranged to carry timing information of a subband transition between a primary band and a specific subband.

The claimed wireless communication method includes: generating a frame, and wirelessly sending the frame from a wireless communication device to at least one another wireless communication device that are associated with the wireless communication device, wherein the frame is arranged to carry timing information of a subband transition between a primary band and a specific subband.

### Brief Description of the Drawings

In the following, the invention is further illustrated by way of example, taking reference to the accompanying drawings. Thereof
FIG. 1 is a diagram illustrating one wireless communication system according to an embodiment of the present invention, and
FIG. 2 is a diagram illustrating another wireless communication system according to an embodiment of the present invention.

### Detailed Description

Certain terms are used throughout the following description and claims, which refer to particular components. As one skilled in the art will appreciate, electronic equipment manufacturers may refer to a component by different names. This document does not intend to distinguish between components that differ in name but not in function. In the following description and in the claims, the terms "include" and "comprise" are used in an open-ended fashion, and thus should be interpreted to mean "include, but not limited to ...". Also, the term "couple" is intended to mean either an indirect or direct electrical connection. Accordingly, if one device is coupled to another device, that connection may be through a direct electrical connection, or through an indirect electrical connection via other devices and connections.

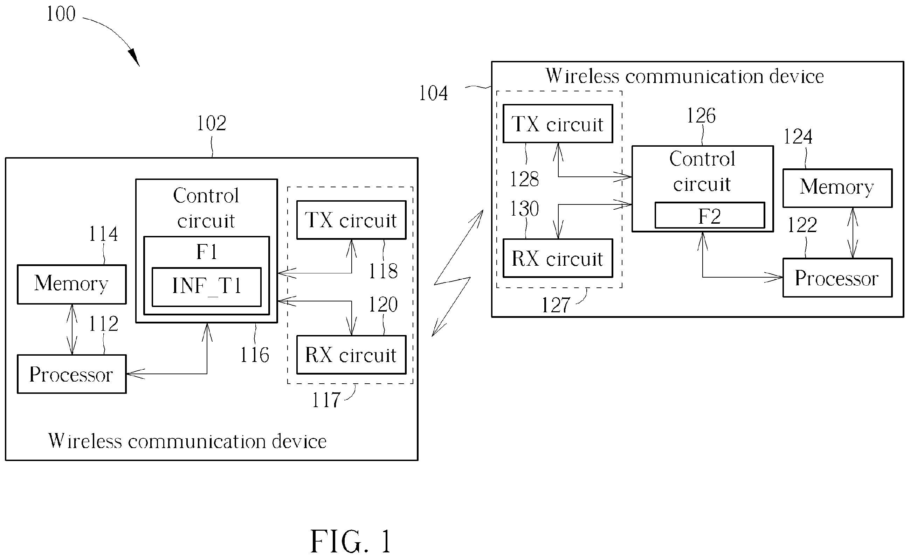

FIG. 1 is a diagram illustrating one wireless communication system according to an embodiment of the present invention. The wireless communication system 100 includes a plurality of wireless communication devices 102 and 104. For example, the wireless communication system 100 is a Wi-Fi system, including an access point (AP) and a non-AP station (STA). In one embodiment of the present invention, the wireless communication device 102 may be an AP, and the wireless communication device 104 may be a non-AP STA. In another embodiment of the present invention, the wireless communication device 102 may be a non-AP STA, and the wireless communication device 104 may be an AP. For brevity and simplicity, only two wireless communication devices 102 and 104 are shown in FIG. 1. In practice, the wireless communication system 100 is allowed to have more than two wireless communication devices, including an AP and more than one non-AP STA in the same basic service set (BSS).

The wireless communication devices 102 and 104 may have the same or similar circuit structure. As shown in FIG. 1, the wireless communication device 102 includes a processor 112, a memory 114, a control circuit 116, and a network interface circuit 117, where the network interface circuit 117 includes a transmitter (TX) circuit 118 and a receiver (RX) circuit 120. The memory 114 is arranged to store a program code. The processor 112 is arranged to load and execute the program code to manage the wireless communication device 102. The control circuit 116 is arranged to control wireless communications with the wireless communication device 104. In a case where the wireless communication device 102 is an AP and the wireless communication device 104 is a non-AP STA, the control circuit 116 controls the TX circuit 118 of the network interface circuit 117 to deal with downlink (DL) traffic between AP and non-AP STA, and controls the RX circuit 120 of the network interface circuit 117 to deal with uplink (UL) traffic between AP and non-AP STA. In another case where the wireless communication device 102 is a non-AP STA and the wireless communication device 104 is an AP, the control circuit 116 controls the TX circuit 118 of the network interface circuit 117 to deal with UL traffic between AP and non-AP STA, and controls the RX circuit 120 of the network interface circuit 118 to deal with DL traffic between AP and non-AP STA.

The wireless communication device 104 includes a processor 122, a memory 124, a control circuit 126, and a network interface circuit 127, where the network interface circuit 127 includes a TX circuit 128 and an RX circuit 130. The memory 124 is arranged to store a program code. The processor 122 is arranged to load and execute the program code to manage the wireless communication device 104. The control circuit 126 is arranged to control wireless communications with the wireless communication device 102. In a case where the wireless communication device 102 is an AP and the wireless communication device 104 is a non-AP STA, the control circuit 126 controls the TX circuit 128 of the network interface circuit 127 to deal with UL traffic between AP and non-AP STA, and controls the RX circuit 130 of the network interface circuit 127 to deal with DL traffic between AP and non-AP STA. In another case where the wireless communication device 102 is a non-AP STA and the wireless communication device 104 is an AP, the control circuit 126 controls the TX circuit 128 of the network interface circuit 127 to deal with DL traffic between AP and non-AP STA, and controls the RX circuit 130 of the network interface circuit 117 to deal with UL traffic between AP and non-AP STA.

It should be noted that only the components pertinent to the present invention are illustrated in FIG. 1. In practice, the wireless communication device 102 may include additional components to achieve designated functions, and/or the wireless communication device 104 may include additional components to achieve designated functions.

In this embodiment, the wireless communications 102 and 104 support the proposed semi-dynamic subband transition operation. Hence, after the wireless communication 102 is successfully associated with the wireless communication device 104 through an association procedure (which includes necessary link negotiations), the control circuit 116 of the wireless communication device 102 generates a frame F1 and sends the frame F1 to the wireless communication device 104 through the network interface circuit 117 (particularly, TX circuit 118 of network interface circuit 117), where the frame F1 is arranged to carry timing information INF_T1 of a subband transition between a primary band and a specific subband. For example, an AP (e.g., one of wireless communication devices 102 and 104) may support 320 MHz as the maximum bandwidth of operation on any link, and a non-AP STA (e.g., another of wireless communication devices 102 and 104) may support only a smaller bandwidth (e.g., 160 MHz or 80 MHz) as the maximum bandwidth of operation. Hence, the 320 MHz bandwidth may be regarded as having one 160MHz primary band (which includes a primary 20MHz channel for transmission of non-data frames such as management frames and control frames) and one 160MHz subband, or may be regarded as having one 80MHz primary band (which includes a primary 20MHz channel for transmission of non-data frames such as management frames and control frames) and three 80MHz subbands. During association between the AP and the non-AP STA, the non-AP STA needs to indicate its capabilities of subband parking, such that the AP is aware of specific subbands and subband bandwidths actually supported by the non-AP STA. The timing information INF T1 of the subband transition may include a start time of the subband transition (i.e., beginning of a period in which the non-AP STA parks at the specific subband), a duration of parking at the specific subband, an end time of the subband transition (i.e., ending of a period in which the non-AP STA parks at the specific subband), or a combination thereof.

The control circuit 126 of the wireless communication device 104 receives the frame F1 (which carries timing information INF T1 of the subband transition) through the network interface circuit 127 (particularly, RX circuit 130 of network interface circuit 127). After the frame F1 is received and parsed, the control circuit 126 of the wireless communication device 104 generates a frame F2, and sends the frame F2 to the wireless communication device 102 through the network interface circuit 127 (particularly, TX circuit 128 of network interface circuit 127). Hence, the control circuit 116 of the wireless communication device 102 receives the frame F2 through the network interface circuit 117 (particularly, RX circuit 120 of network interface circuit 117). Specifically, the frame F2 is generated from the wireless communication device 104 in response to the frame F1 sent by the wireless communication device 102. For example, the frame F2 indicates whether the subband transition is accepted or rejected. For another example, the frame F2 may carry a counter transition plan (parameters) different from that originally indicated in the frame F1.

Consider a first case where the wireless communication device 102 is an AP and the wireless communication device 104 is a non-AP STA. After the non-AP STA is associated with the AP (i.e., after an association procedure between the AP and the non-AP STA is successfully finished), the AP sends the frame F1 to trigger the non-AP STA to park at a specific subband from a time instant decided by the AP. When to trigger the subband transition depends on AP's decision. For example, the AP may trigger the subband transition at the non-AP STA when detecting that OBSS loading is large or primary band is too crowded.

The frame F1 may be a unicast frame that is unicasted to the non-AP STA. Alternatively, when there are multiple wireless communication devices 104 being non-AP STAs associated with the same wireless communication device 102 being the AP, the frame F1 may be a broadcast frame that is broadcasted to multiple non-AP STAs, or the frame F1 may be a groupcast frame that is groupcasted to multiple non-AP STAs belonging to the same group.

The 320MHz AP may have one 160MHz subband or three 80MHz subbands. The specific subband at which the non-AP STA is triggered to park may be set by the 160MHz subband, or may be selected from three 80MHz subbands. In addition, one primary 20MHz channel of the 160MHz subband and one primary 20MHz channel of each of the 80MHz subbands need to be assigned as well.

The non-AP STA may accept the subband transition triggered by the AP if the time instant or other reasons can be satisfied, and may send the frame F2 to inform the AP that the subband transition is accepted. The non-AP STA may refuse the subband transition requested by the AP if the time instant or other reasons cannot be satisfied, and may send the frame F2 to inform the AP that the subband transition is rejected. Alternatively, the non-AP STA may propose its counter transition plan (parameters), and respond with the counter transition plan (parameters) by sending the frame F2 to the AP.

When the subband transition triggered by the AP is accepted by the non-AP STA, the non-AP STA will park at the specific subband specified by the AP during a parking period which is also specified by the AP. In some embodiments of the present invention, UL traffic between the AP and the non-AP STA is only triggered by the AP during a period in which the non-AP STA parks at the specific subband. In some embodiments of the present invention, the non-AP STA is free to do channel contention according to an enhanced distributed channel access (EDCA) mechanism, where the AP shall be capable of receiving in parallel on the primary band and the subbands. In some embodiments of the present invention, during a period in which the non-AP STA parks at the specific subband, the non-AP STA is allowed to respond with at least one frame that requires immediate response, without considering the limitations that UL traffic is only triggered by the AP and EDCA-based channel contention is required.

The parking period (i.e., the period in which the non-AP STA parks at the specific subband specified by the frame F1) is allowed to be longer than a beacon period. That is, the parking period may overlap one or more than one target beacon transmission time (TBTT). The AP needs to guarantee that the subband parking non-AP STA being able to receive beacon frames and other broadcast/groupcast frames. Furthermore, non-HT duplicate frames are necessary to ensure the subband receiving. In some embodiments of the present invention, the AP needs to do channel contention, such as EDCA-based channel contention, to transmit at least one beacon frame on the specific subband during a period in which the non-AP STA parks at the specific subband. Beacon transmission on the primary band and beacon transmission on the subband may be performed separately. Furthermore, a beacon serial number may be added to the beacon frame to differentiate duplication. However, these are for illustrative purposes only, and are not meant to be limitations of the present invention.

Consider a second case where the wireless communication device 102 is a non-AP STA and the wireless communication device 104 is an AP. After the non-AP STA is associated with the AP, the non-AP STA may spontaneously send the frame F1 to the AP to indicate/request that it wants to transit to a specific subband (e.g., one 160MHz subband within the 320MHz bandwidth supported by AP, or one of three 80MHz subbands within the 320MHz bandwidth supported by AP). Similarly, the frame F1 is arranged to carry timing information INF_T1 of a subband transition between a primary band and a specific subband, where the timing information INF_T1 of the subband transition may include a start time of the subband transition (i.e., beginning of a period in which the non-AP STA parks at the specific subband), a duration of parking at the specific subband, an end time of the subband transition (i.e., ending of a period in which the non-AP STA parks at the specific subband), or a combination thereof.

The AP may accept the subband transition requested by the non-AP STA, or may refuse the subband transition requested by the non-AP, or may propose its counter transition plan (parameters) different from that originally indicated in the frame F1. Hence, upon receiving the request frame F1 from the non-AP STA, the AP responds with the frame F2 to the non-AP STA.

The major difference between the STA spontaneous transition request scheme and the AP triggered transition scheme is that the initiators of the subband transition are different. Since a person skilled in the art can readily understand details of the STA spontaneous transition request scheme after reading above paragraphs directed to the AP triggered transition scheme, similar description is omitted here for brevity.

If the timing information INF_T1 of the subband transition that is carried by the frame F1 includes the end time of the subband transition, when to go back to the primary band is specified by the frame F1 in a static way. However, this is for illustrative purposes only, and is not meant to be a limitation of the present invention. Alternatively, the frame F1 may not specify the end time of the subband transition, and when to go back to the primary band may be dynamically specified by another frame that is transmitted later than the frame F1.

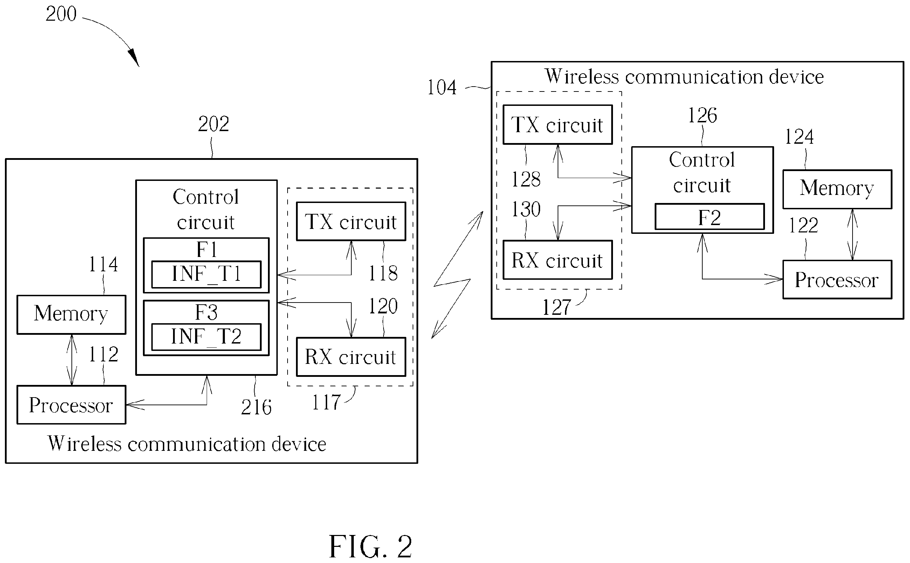

FIG. 2 is a diagram illustrating another wireless communication system according to an embodiment of the present invention. The major difference between the wireless communication systems 100 and 200 is that the control circuit 216 of the wireless communication device 202 is further arranged to generate a frame F3 and send the frame F3 to the wireless communication device 104 through the network interface circuit 117 (particularly, TX circuit 118 of network interface circuit 117). The frame F3 indicates the time instant to switch back to the primary band. For example, the frame F3 is arranged to carry other timing information INF_T2 of the subband transition, where the timing information INF_T2 of the subband transition includes an end time of the subband transition. For example, the end time of the subband transition may be set by a time instant just before the TBTT to prevent ongoing traffic from being interrupted. Furthermore, STA's channel switch time requirement can also be considered to ensure the STA being capable of receiving the beacon frame in time.

The wireless communication system 200 may be a Wi-Fi system, including an AP and a non-AP STA. In one embodiment of the present invention, the wireless communication device 202 may be an AP, and the wireless communication device 104 may be a non-AP STA. In another embodiment of the present invention, the wireless communication device 202 may be a non-AP STA, and the wireless communication device 104 may be an AP. For brevity and simplicity, only two wireless communication devices 202 and 104 are shown in FIG. 2. In practice, the wireless communication system 200 is allowed to have more than two wireless communication devices, including an AP and more than one non-AP STA in the same BSS.

Consider a case where the wireless communication device 202 is the AP and the wireless communication device 104 is the non-AP STA. The frame F3 may be a unicast frame that is unicasted to the non-AP STA. However, this is for illustrative purposes only, and is not meant to be a limitation of the present invention. When there are multiple wireless communication devices 104 being non-AP STAs associated with the same wireless communication device 202 being the AP, the frame F3 may be a broadcast frame that is broadcasted to multiple non-AP STAs, or the frame F3 may be a groupcast frame that is groupcasted to multiple non-AP STAs belonging to the same group. For example, the frame F3 is receivable on the subband, and the end time of the subband transition (i.e., ending of the period in which the non-AP STA parks at the specific subband specified by the AP) may be announced in a beacon frame or a group addressed frame. In some embodiments of the present invention, STAs being capable of receiving on the primary band can be different based on their channel switch time requirements.

As mentioned above, the wireless communication device 104 generates and transmits the frame F2 to the wireless communication device 102 in response to receiving the frame F 1 transmitted from the wireless communication device 102 (or 202). In some embodiments of the present invention, both of the frames F1 and F2 may be transmitted on the same link after the wireless communication devices 102 (or 202) and 104 are associated with each other. However, this is for illustrative purposes only, and is not meant to be a limitation of the present invention. Alternatively, the frame F1 used to trigger (or request) the subband transition could be transmitted on another link after the wireless communication devices 102 (or 202) and 104 are associated in multi-link operation (MLO).

Specifically, multiple links at different Wi-Fi bands (e.g., 2.4GHz band, 5GHz band, and 6GHz band) can be established between the wireless communication devices 102 (or 202) and 104 that are multi-link devices (MLDs) under MLO. The frame exchange, including frames F1 and F2, is allowed to happen in a cross-link way. That is, the frame F1 may be transmitted from the wireless communication device 102 (or 202) to the wireless communication device 104 on a first link at a first Wi-Fi band, and the frame F2 may be transmitted from the wireless communication device 104 to the wireless communication device 102 (or 202) on a second link at a second Wi-Fi band that is different from the first Wi-Fi band.

Furthermore, since there are multiple links available between the wireless communication devices 102 (or 202) and 104 under MLO, an extra link identifier (ID) may be added to the frame F1 to specify that the subband transition is to be executed on a specific link indexed by the link ID. For example, the frame F1 may be transmitted on a first link that is different from a second link on which the subband transition is to be executed, and the aforementioned link ID carried by the frame F 1 may be set by an ID of the second link.

The proposed semi-dynamic subband transition scheme has several features different from that of the conventional subband transition schemes. The proposed semi-dynamic subband transition scheme can manage subband transition of multiple non-AP STAs in a broadcast/groupcast way, as opposed to individually negotiating with each of the non-AP STAs. The proposed semi-dynamic subband transition scheme can determine the transition period in an ad-hoc and dynamic way after the association procedure is successfully finished, as opposed to using a pre-defined service period that is negotiated during the association procedure. The proposed semi-dynamic subband transition scheme can determine the subband dynamically after the association procedure is successfully finished, as opposed to using a pre-defined subband that is set during the association procedure. The proposed semi-dynamic subband transition scheme can dynamically determine the start time of the subband transition and provide less stringent transition latency, as opposed to having the subband transition happen immediately after the trigger frame was received. The proposed semi-dynamic subband transition scheme can dynamically determine the end time of the subband transition, as opposed to terminating the subband transition no later than the end of transmit opportunity (TXOP). To put it simply, the proposed semi-dynamic subband transition scheme can achieve a balance between operation limitations of the conventional subband transition schemes.

## Claims

1. A wireless communication device (102, 202) **characterized by**:
a network interface circuit (117), arranged to communicate with at least one another wireless communication device (104) that is associated with the wireless communication device (102, 202); and
a control circuit (116, 216), arranged to generate a first frame (F1) and send the first frame (F1) to said at least one another wireless communication device (104) through the network interface circuit (117), wherein the first frame (F1) is arranged to carry timing information of a subband transition between a primary band and a specific subband (INF_T1).

2. The wireless communication device (102, 202) of claim 1, **characterized in that** the timing information of the subband transition (INF_T1) comprises at least one of a start time of the subband transition, a duration of parking at the specific subband, and an end time of the subband transition.

3. The wireless communication device (102, 202) of claim 1, **characterized in that** the control circuit (116, 216) is further arranged to receive a second frame (F2) through the network interface circuit (117), and the second frame (F2) is generated from said at least one another wireless communication device (104) in response to the first frame (F1).

4. The wireless communication device (102, 202) of claim 3, **characterized in that** the wireless communication device (102, 202) and said at least one another wireless communication device (104) are associated in multi-link operation, and the first frame (F1) and the second frame (F2) are transmitted on different links between the wireless communication device (102, 202) and said at least one another wireless communication device (104).

5. The wireless communication device (102, 202) of claim 1, **characterized in that** the wireless communication device (102, 202) and said at least one another wireless communication device (104) are associated in multi-link operation, and the first frame (F1) is transmitted on a first link that is different from a second link on which the subband transition is to be executed; or
wherein the wireless communication device (102, 202) and said at least one another wireless communication device (104) are associated in multi-link operation, and the first frame (F1) is further arranged to carry a link identifier which specifies a specific link on which the subband transition is to be executed.

6. The wireless communication device (102, 202) of claim 1, **characterized in that** said at least one another wireless communication device (104) comprises only a single wireless communication device, and the first frame (F1) is a unicast frame; or
wherein said at least one another wireless communication device (104) comprises multiple wireless communication devices, and the first frame (F1) is a broadcast frame or a groupcast frame.

7. The wireless communication device (202) of claim 1, **characterized in that** the control circuit (216) is further arranged to generate a second frame (F3) and send the second frame (F3) to said at least one another wireless communication device (104) through the network interface circuit (117), and the second frame (F3) is arranged to carry other timing information of the subband transition (INF_T2), and said other timing information of the subband transition (INF_T2) comprises an end time of the subband transition.

8. The wireless communication device (202) of claim 7, **characterized in that** said at least one another wireless communication device (104) comprises only a single wireless communication device, and the second frame (F3) is a unicast frame; or
wherein said at least one another wireless communication device (104) comprises multiple wireless communication devices, and the second frame (F3) is a broadcast frame or a groupcast frame.

9. The wireless communication device (102, 202) of claim 1, **characterized in that** the wireless communication device (102, 202) is an access point, hereinafter referred to as AP, and said at least one another wireless communication device (104) is a non-AP station, hereinafter referred to as STA.

10. The wireless communication device (102, 202) of claim 9, **characterized in that** during a period in which the non-AP STA (104) parks at the specific subband, uplink traffic between the AP (102, 202) and the non-AP STA (104) is only triggered by the AP (102, 202); or wherein a period in which the non-AP STA (104) parks at the specific subband is longer than a beacon period; and during the period in which the non-AP STA (104) parks at the specific subband, the AP (102, 202) is arranged to transmit at least one beacon frame on the specific subband.

11. The wireless communication device (102, 202) of claim 1, **characterized in that** said at least one another wireless communication device (104) is an access point, hereinafter referred to as AP, and the wireless communication device (102, 202) is a non-AP station, hereinafter referred to as STA.

12. The wireless communication device (102, 202) of claim 11, **characterized in that** during a period in which the non-AP STA (102, 202) parks at the specific subband, the non-AP STA (102, 202) is further arranged to do channel contention; or
wherein during a period in which the non-AP STA (102, 202) parks at the specific subband, the non-AP STA (102, 202) is further arranged to respond with at least one frame that requires immediate response.

13. A wireless communication device (104) **characterized by**:
a network interface circuit (127), arranged to communicate with at least one another wireless communication device (102, 202) that is associated with the wireless communication device (104); and
a control circuit (126), arranged to receive a first frame (F1) from said at least one another wireless communication device (102, 202) through the network interface circuit (127), wherein the first frame (F1) is arranged to carry timing information of a subband transition between a primary band and a specific subband (INF_T1).

14. The wireless communication device (104) of claim 13, **characterized in that** the timing information of the subband transition (INF_T1) comprises at least one of a start time of the subband transition, a duration of parking at the specific subband, and an end time of the subband transition; or
wherein the control circuit (126) is further arranged to receive a second frame (F3) from said at least one another wireless communication device (202) through the network interface circuit (127), the second frame (F3) is arranged to carry other timing information of the subband transition (INF_T2), and said other timing information of the subband transition (INF_T2) comprises the end time of the subband transition.

15. A wireless communication method **characterized by**:
generating a frame (F1); and
wirelessly sending the frame (F1) from a wireless communication device (102, 202) to at least one another wireless communication device (104) that are associated with the wireless communication device (102, 202);
wherein the frame (F1) is arranged to carry timing information of a subband transition between a primary band and a specific subband (INF_T1).
